## Europäisches Patentamt
## European Patent Office
## Office européen des brevets

(19)

(11) Numéro de publication: **0 135 459**
**B1**

(12)

# FASCICULE DE BREVET EUROPEEN

(45) Date de publication du fascicule du brevet:
07.01.88

(51) Int. Cl.⁴: **A 01 D 34/63**

(21) Numéro de dépôt: **84440025.9**

(22) Date de dépôt: **07.06.84**

(54) **Faucheuse à disques perfectionnée.**

(30) Priorité: **01.07.83 FR 8311130**

(43) Date de publication de la demande:
**27.03.85 Bulletin 85/13**

(45) Mention de la délivrance du brevet:
**07.01.88 Bulletin 88/1**

(84) Etats contractants désignés:
**DE GB IT NL**

(56) Documents cités:
**CH - A - 569 896**
**FR - A - 1 575 994**
**FR - A - 2 527 725**
**GB - A - 2 048 639**

(73) Titulaire: **KUHN S.A., 4, Impasse des Fabriques,
F-67700 Saverne (FR)**

(72) Inventeur: **Neuerburg, Horst, Grand'Rue Haegen,
F-67700 Saverne (FR)**

ACTORUM AG

## Description

La présente invention concerne les faucheuses à disques comportant un carter situé sous les disques et contenant un organe de transmission sans fin en vue de l'entraînement par le bas d'au moins un desdits disques et s'enroulant sur une roue de renvoi.

On connaît des faucheuses de ce type notamment celles décrites par la GB-A-2 002 622 et le FR-A-1 484 044. Pour ce qui concerne la GB-A-2 002 622, celle-ci décrit une faucheuse à disques comportant un carter situé sous les disques et contenant un organe de transmission sans fin (courroie) en vue de l'entraînement par le bas d'au moins un desdits disques. Sur la fig. 15, on voit que le brin de la courroie tendu par l'effort d'entraînement est celui qui s'enroule sur les roues d'entraînement des disques, alors que le brin qui s'étend entre la roue motrice, la roue de renvoi et la roue d'entraînement du dernier disque, est le brin mou. Du reste un mécanisme tendeur à deux roues a pour seule fonction de maintenir une tension constante dans la courroie.

Pour ce qui concerne le FR-A-1 484 044, celui-ci décrit aussi une faucheuse à disques comportant un carter situé sous les disques et contenant un organe de transmission sans fin (chaîne) en vue de l'entraînement par le bas d'au moins un des disques.

Dans ce second exemple, le brin tendu par l'effort de transmission est également celui qui s'enroule sur les pignons d'entraînement des disques, tandis que le brin qui s'étend entre la roue motrice et le pignon d'entraînement du dernier disque, est le brin mou. De plus un galet qui peut être pourvu d'un ressort et qui s'applique sur ledit brin mou, remplit également la seule fonction de maintenir une tension constante dans ladite chaîne.

L'inconvénient de ces faucheuses est la relative fragilité de l'organe de transmission sans fin lorsqu'un des disques de la barre de coupe rencontre un obstacle.

Le but de la présente invention est de remédier à cet inconvénient dans la mesure où le brin de retour de l'organe de transmission sans fin qui s'étend entre la roue du dernier disque et la roue motrice est le brin tendu de l'organe de transmission sans fin et que le brin de retour s'enroule de façon connue en soi sur une roue de renvoi qui peut se déplacer à l'encontre de moyens élastiques.

On utilise ainsi une grande longueur de l'organe de transmission sans fin ainsi que lesdits moyens élastiques, à l'encontre desquels peut se déplacer la roue de renvoi sur laquelle s'enroule l'organe de transmission sans fin entre la dernière roue de disque et la roue motrice, pour amortir les efforts engendrés par la rencontre d'un disque avec un obstacle.

D'autres caractéristiques de l'invention ressortent des sous-revendications et de la description ci-dessous nullement limitative d'exemples de réalisation de l'invention se référant aux dessins annexés sur lesquels:

– la fig. 1 représente une vue d'un premier exemple de faucheuse à disques selon l'invention,
– la fig. 2 représente schématiquement l'entraînement des disques de la faucheuse de la fig. 1,
– la fig. 3 représente schématiquement une variante de la disposition de la roue motrice de l'entraînement des disques de la faucheuse de la fig. 1,
– la fig. 4 représente schématiquement une variante de la disposition de roues de renvoi de l'entraînement des disques de la faucheuse de la fig. 1,
– la fig. 5 représente une vue en perspective de la courroie d'entraînement,
– la fig. 6 représente une vue de la barre de coupe, coupée suivant le plan VI–VI défini sur la fig. 2,
– la fig. 7 représente une vue schématique de la disposition des roues,
– la fig. 8 représente une vue schématique d'une variante de la disposition des roues,
– la fig. 9 représente une vue d'un deuxième exemple de faucheuse à disque selon l'invention,
– la fig. 10 représente schématiquement l'entraînement des disques de la faucheuse de la fig. 9,
– la fig. 11 représente schématiquement une variante de l'entraînement des disques de la faucheuse de la fig. 9.

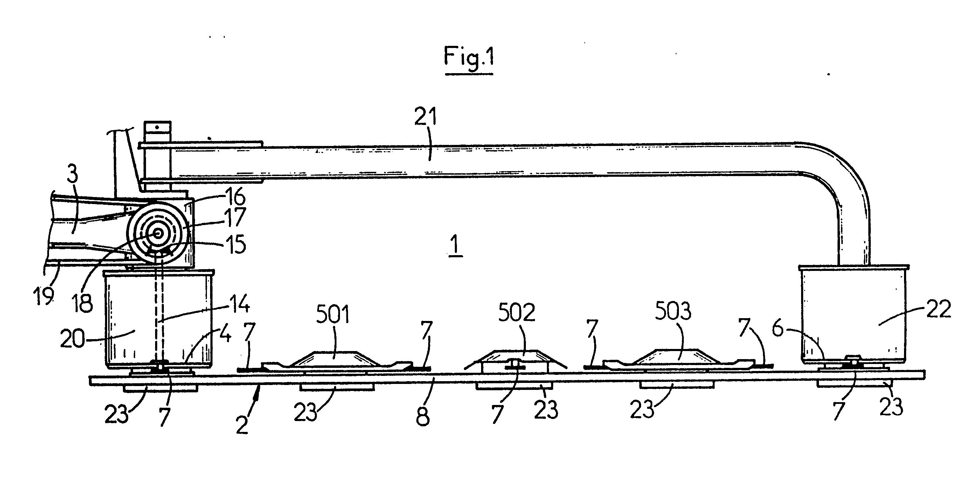

La faucheuse rotative (1) représentée sur la fig. 1 comporte notamment une barre de coupe (2) et un châssis (3) qui n'est que partiellement représenté, permettant l'attelage de ladite faucheuse à l'arrière d'un tracteur d'entraînement non représenté.

La barre de coupe (2) possède à titre d'exemple non limitatif cinq disques (4, 501, 502, 503, 6) supportant des éléments coupants (7). Chacun de ces disques (4, 501, 502, 503, 6) est muni à titre d'exemple non limitatif de deux éléments coupants (7) diamétralement opposés qui se déplacent sur des trajectoires circulaires lors de la rotation desdits disques.

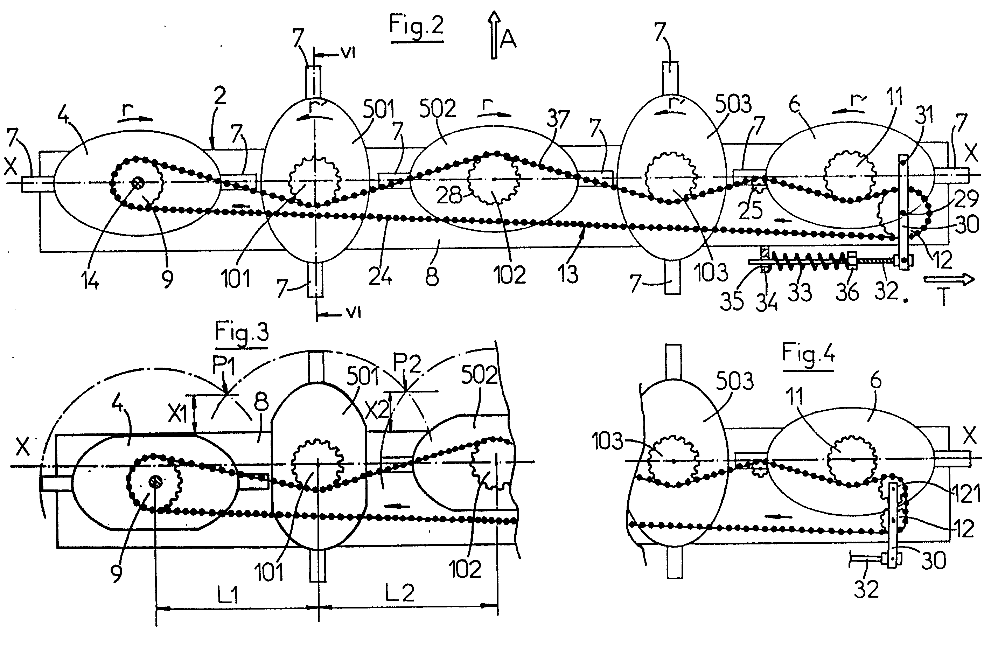

Durant le travail, les disques (4, 501, 502, 503, 6) sont entraînés en rotation à l'aide d'organes de transmission décrits ci-après plus en détail et logés dans un carter (8) s'étendant sous lesdits disques. Comme cela ressort de la fig. 2, ces organes de transmission sont constitués par des roues (9, 101, 102, 103, 11, 12) et un organe de transmission sans fin (13). La roue (9) est la roue motrice et est entraînée en rotation par un arbre sensiblement vertical (14) qui s'étend à travers le premier disque (4) jusque dans le carter (8). Cet arbre (14) est lui-même entraîné au moyen d'un renvoi d'angle (15) logé dans un carter de renvoi (16) lié au châssis (3) et placé à une certaine distance au-dessus du premier disque (4). Une poulie à gorges (17) calée sur l'arbre d'entrée (18) du carter de renvoi (16), permet d'entraîner le renvoi d'angle (15) et par conséquent l'arbre (14) et les roues (9, 101, 102, 103, 11, 12) ainsi que l'organe de transmission sans fin (13). Cette poulie (17) est entraînée en rotation à l'aide d'au moins une courroie (19) passant sur une seconde poulie à gorges non représentée qui est située derrière le tracteur d'entraînement. Cette seconde poulie à gorges est elle-même entraînée par un arbre de transmission non représenté relié à l'arbre de prise de force du tracteur d'entraînement.

L'arbre sensiblement vertical (14) est entouré d'un tambour (20) solidaire du disque (4). Ce tambour (20) empêche l'enroulement de fourrage coupé autour de l'arbre (14) et favorise l'évacuation vers l'arrière du fourrage coupé par le disque (4).

La barre de coupe (2) est renforcée au moyen d'une poutre (21) disposée sensiblement parallèlement au-dessus d'elle.

Cette poutre (21) est liée d'une part au carter de renvoi (16) et d'autre part à l'extrémité extérieure de la barre de coupe (2). A cet effet, l'extrémité extérieure de cette poutre (21) est courbée vers le bas et est reliée au disque (6) sans empêcher la rotation de celui-ci. Cette poutre (21) permet de donner une faible épaisseur au carter (8) en vue d'obtenir une coupe du fourrage au ras du sol. La partie courbée de la poutre (21) est partiellement entourée par un tambour (22) solidaire du disque (6). Similairement au tambour (20), le tambour (22) empêche l'enroulement du fourrage coupé autour de la partie courbée de la poutre (21) et favorise l'évacuation vers l'arrière du fourrage coupé par le disque (6). Comme la faucheuse (1) est dans l'exemple représenté attelée à l'arrière d'un tracteur d'entraînement de manière que la barre de coupe (2) s'étende transversalement au sens d'avancement, le tambour (22) permet en sus de séparer le fourrage coupé du fourrage encore sur pied. Cette séparation du fourrage coupé et du fourrage encore sur pied, dégage une bande de terrain non recouverte de fourrage coupé, sur laquelle pourront rouler les roues du tracteur d'entraînement au passage suivant, sans écraser une partie du fourrage coupé au passage précédent.

La barre de coupe (2) comporte également à sa face inférieure des patins (23) qui lui permettent de glisser sur le sol pendant le travail.

La fig. 2 montre schématiquement l'entraînement des disques de la barre de coupe de la faucheuse représentée sur la fig. 1.

Les deux disques (4, 502) tournent dans le sens (r) tandis que les trois disques (501, 503, 6) tournent dans le sens contraire (r'). Ainsi, les disques voisins (4, 501) et (502, 503) tournent en sens contraire tandis que les disques (503, 6) tournent dans le même sens. Il est à observer que les disques (4, 6) situés à chaque extrémité de la barre de coupe (2) respectivement, tournent également en sens contraire de manière qu'à l'avant de la barre de coupe (2) (compte tenu du sens d'avancement (A)) les disques (4, 6) tournent vers le milieu de la barre de coupe (2). Ces sens de rotation des disques d'extrémité (4, 6) sont dictés par le fait que la largeur de l'andain de fourrage coupé que laisse la barre de coupe dans son sillage, doit en général être plus petite que la largeur de coupe pour que ledit andain de fourrage coupé puisse passer entre les roues du tracteur d'entraînement au passage suivant sans être écrasé.

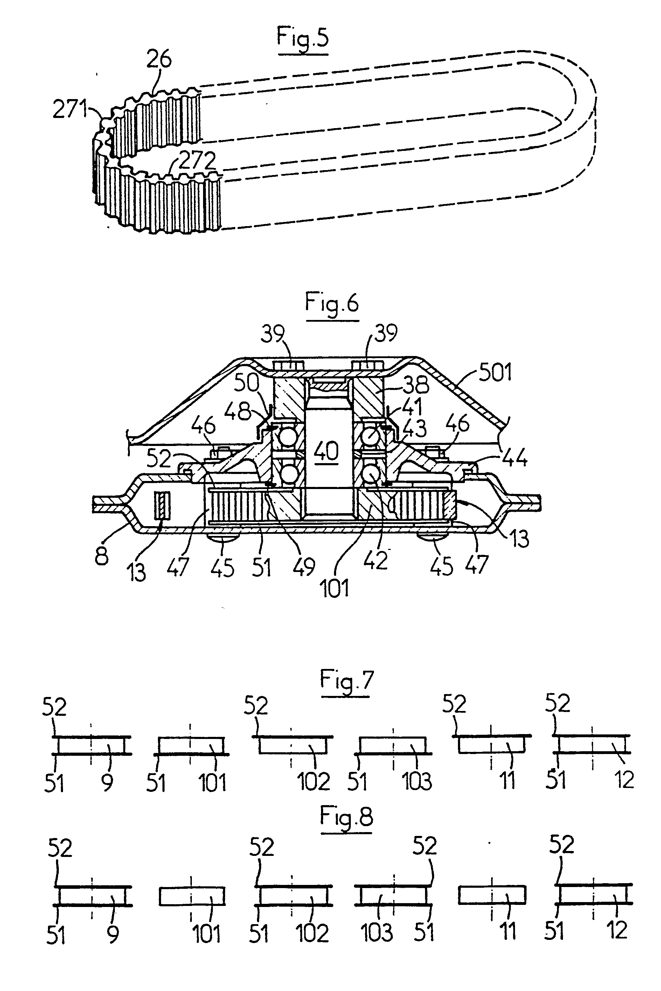

Compte tenu du sens de rotation de la roue motrice (9) qui est le même que celui du disque (4) et du sens de rotation de la roue de disque (11) qui est le même que celui du disque (6), on a agencé la roue (12) qui permet au brin de retour (24) de s'étendre correctement derrière les roues de disque entre la dernière roue de disque (11) et la roue motrice (9). Comme la roue de disque (103) tourne aussi dans le même sens que la roue de disque (11), une roue supplémentaire (25) est agencée entre lesdites roues de disque pour que la longueur de l'organe de transmission sans fin (13) qui collabore avec ces roues de disque soit suffisante pour transmettre la puissance nécessaire à l'entraînement de celles-ci. L'organe de transmission sans fin (13) est une courroie crantée sur les deux faces tel que visible sur la fig. 5. Cette courroie se compose d'une âme (26) et de saillies (271, 272) situées de part et d'autre de ladite âme (26). Ces saillies (271, 272) collaborent avec des creux (28) aménagés à la périphérie des roues (9, 101, 102, 103, 11, 12, 25). Ainsi la rotation des disques (4, 501, 502, 503, 6) est synchronisée de sorte que les éléments coupants (7) d'un disque ne risquent pas d'entrer en collision avec les éléments coupants des disques voisins ou avec lesdits disques voisins après un certain temps de travail.

La tension correcte de la courroie (13) est obtenue en agissant sur la roue (12). A cet effet, la fig. 2 montre schématiquement un mécanisme permettant le réglage de ladite tension. L'axe de rotation (29) de la roue (12) est lié à un levier (30) susceptible de pivoter par rapport au carter (8) autour d'un axe (31) s'étendant à l'une des extrémités dudit levier (30). L'autre extrémité du levier (30) est liée à l'extrémité d'une tige (32). Cette tige s'étend partiellement à l'intérieur d'un ressort de compression (33). L'autre extrémité de la tige (32) s'étend librement à travers une butée (34) solidaire du carter (8). A cet effet, la butée (34) comporte un trou (35) dont le diamètre est plus grand que le diamètre de la tige (32). Une partie au moins de la tige (32) est filetée de manière à ce qu'on puisse y visser un écrou (36) qui s'étend entre la butée (34) et le levier (30). Le ressort de compression (33) est, quant à lui, interposé entre la butée (34) et l'écrou (36). L'axe de rotation (31) est disposé de telle manière qu'une rotation du levier (30) et de la roue (12) autour dudit axe provoque un déplacement de la roue (12) essentiellement sensiblement dans la direction de la flèche (T).

Ce mécanisme fonctionne de la manière suivante. Lorsqu'on veut monter une courroie (13), on dévisse l'écrou (36) pour détendre au maximum le ressort (33). Quand la courroie (13) est en place, on visse l'écrou (36), ce qui a pour effet de déplacer la tige (32) dans le sens de la flèche (T). Pendant son déplacement, la tige (32) pousse sur le levier (30) et provoque la rotation de ce dernier et de la roue (12) autour de l'axe (31). Lorsque la corroie (13) commence à être tendue, un vissage supplémentaire de l'écrou (36) aura pour conséquence de comprimer le ressort (33) qui exerce alors une certaine pression sur le levier (30) et maintient une certaine tension sur la courroie (13). Il est à observer qu'une rotation du levier (30) et de la roue (12) autour de l'axe (31), qui provoque leur déplacement dans le sens contraire de la flèche (T), est possible compte tenu de l'agencement du ressort (33). L'avantage de cet agencement apparaîtra ci-après dans la description.

Le réglage de la tension de la courroie (13) à l'aide d'une roue qu'on déplace essentiellement sensiblement dans la direction longitudinale du carter (8), c'est-à-dire essentiellement sensiblement dans la direction du brin de retour (24), est particulièrement avantageux. La tension correcte de la courroie (13) ne nécessite en effet qu'un déplacement relativement faible de ladite roue et ne provoque qu'une perturbation minime du déphasage initial des disques (4, 501, 502, 503, 6).

Le brin de retour (24) de la courroie (13) s'étend derrière les roues de disque (101, 102, 103, 11) à une distance suffisante pour qu'il n'interfère pas avec la roue (102) ou avec le brin d'entraînement (37) qui passe sur lesdites roues de disque. Pour ce faire, la roue (12) est décalée vers l'arrière de manière à s'étendre en tout ou en partie derrière la ligne (X, X) joignant les axes de rotation des roues de disque (101, 102, 103, 11). Il est également possible dans le cadre de l'invention, de décaler vers l'arrière de la ligne (X, X), la roue motrice (9) (fig. 3) et/ou d'agencer deux roues (12, 121) (fig. 4).

Dans le cas de réalisation de la fig. 3, il est possible dans le cadre de l'invention, que la distance (L1) entre les axes de rotation des disques (4, 501) soit plus petite que la distance (L2) entre les axes de rotation des disques (501, 502, 503, 6). Ainsi, la distance (X1) entre le carter (8) et le point d'intersection (P1) des trajectoires extrêmes des éléments coupants (7) des deux disques (4, 501) peut être sensiblement égale à la distance (X2) entre ledit carter (8) et le point d'intersection (P2) des trajectoires extrêmes des éléments coupants (7) des disques (501, 502, 503, 6).

Dans le cas où la barre de coupe (2) comporte deux roues (12, 121), la roue (121) peut s'étendre à n'importe quel endroit entre la roue (12) et la roue motrice (9). Il est cependant avantageux que ladite roue (121) s'étende près de la dernière roue de disque (11) entre cette roue de disque et la roue (12). Dans ce cas, en effet, lors du réglage de la tension de la courroie (13), la position de la roue (121) peut rester fixe par rapport à la roue de disque (11), de sorte que la longueur avec laquelle la courroie (13) s'enroule sur ladite roue de disque (11) ne varie pas lors dudit réglage de la tension. Le réglage de la tension est réalisé sur la roue (12) d'une manière analogue à celle décrite dans la fig. 2, l'axe de rotation du levier (30) par rapport au carter (8) étant confondu avec l'axe de rotation de la roue (121).

Compte tenu du sens de rotation de la roue motrice (9), le brin de retour (24) de la courroie (13) est tendu.

Cet agencement de l'entraînement est particulièrement avantageux pour une courroie ayant une élasticité très réduite, car il permet d'encaisser les chocs auxquels sont soumis les disques pendant le travail et diminue ainsi les risques de rupture de ladite courroie.

En effet, lorsqu'un des disques (501, 502, 503, 6) rencontre un obstacle, il se produit un freinage instantané très important, voire un blocage de ce disque. Comme la roue motrice (9) continue à être entraînée par l'arbre (14), elle tire sur le brin de retour (24) de la courroie (13) qui tire lui sur la roue (12). Cette traction exercée sur la roue (12) provoque le déplacement de celle-ci dans le sens contraire de la flèche (T) puisque le ressort (33) autorise un tel déplacement. Ainsi, l'effort engendré par le freinage ou le blocage d'un disque, est efficacement amorti et les risques de rupture de la courroie (13) sont substantiellement diminués. On ne sortira cependant pas du cadre de l'invention si la fonction d'amortissement de l'effort résultant du freinage ou du blocage d'un disque et la fonction de réglage de la tension de la courroie sont remplies par deux roues différentes. Il est à observer que pour bien amortir ces efforts sans nécessiter un grand déplacement de la roue qui remplit cette fonction, il est souhaitable que celle-ci se déplace dans une direction essentiellement sensiblement parallèle à celle du brin de retour (24).

La fig. 6 montre le montage d'un disque sur le carter (8). Le disque est fixé sur un entraîneur (38) à l'aide d'un certain nombre de vis (39). L'entraîneur (38) est lié en rotation et en translation à un arbre de disque (40), lui-même lié en rotation et en translation à une roue de disque. Deux roulements (41, 42) espacés par une entretoise (43), s'étendent entre l'entraîneur (38) et la roue de disque. Les roulements (41, 42) sont logés dans l'alésage d'un palier de disque (44) centré dans un alésage aménagé dans la partie supérieure du carter (8) et fixé sur ce carter au moyen d'un certain nombre de vis (45) et d'écrous (46), lesdites vis (45) traversant le carter (8) et des entretoises (47) logées dans celui-ci. Les roulements (41, 42) sont liés en translation au palier de disque (44) à l'aide de deux circlips (48, 49). Un déflecteur (50) protège les roulements (41, 42) en évitant l'introduction de débris végétaux entre l'entraîneur (38) et le palier de disque (44). Le carter (8) est formé par deux profilés reliés entre eux d'une manière qui est à la portée de l'homme de l'art. La roue de disque comporte deux flasques (51, 52) situés respectivement sur chaque face de ladite roue de disque. Le diamètre de ces flasques (51, 52) est légèrement plus grand que le diamètre extérieur de la circonférence cylindrique qui comporte les creux (28). La fonction de ces flasques est de maintenir axialement la courroie (13) pour qu'elle ne glisse pas et collabore toujours sur toute sa largeur avec la roue de disque.

Des flasques analogues peuvent également équiper la roue motrice (9) et/ou la roue (12).

Par ailleurs, si la courroie (13) est assez rigide dans le sens de sa largeur, il est possible dans le cadre de l'invention, d'équiper une ou plusieurs des roues de disque (101, 102, 103) que d'un seul flasque, voire d'avoir une ou plusieurs de ces roues sans flasque. Les figures 7 et 8 montrent schématiquement deux exemples non limitatifs de disposition possible. Sur la figure 7 la roue motrice (9) et la roue (12) sont équipées de deux flasques (51, 52) tandis que les roues de disque (101, 102, 103, 11) ne sont équipées chacune que d'un seul flasque (51 ou 52) disposé alternativement à la face inférieure ou supérieure desdites roues de disque. Sur la figure 8, la roue motrice (9) et la roue (12) sont également équipées de deux flasques (51, 52) de même que les roues de disque (102, 103), alors que les roues de disque (101, 11) n'en ont pas. En général, il est préférable que la roue motrice (9) et la roue (12) soient munies de deux flasques (51, 52) car le brin (24) de la courroie (13) qui s'étend entre ces deux roues, n'est pas maintenu entre celles-ci ou du moins que par un nombre limité de roues.

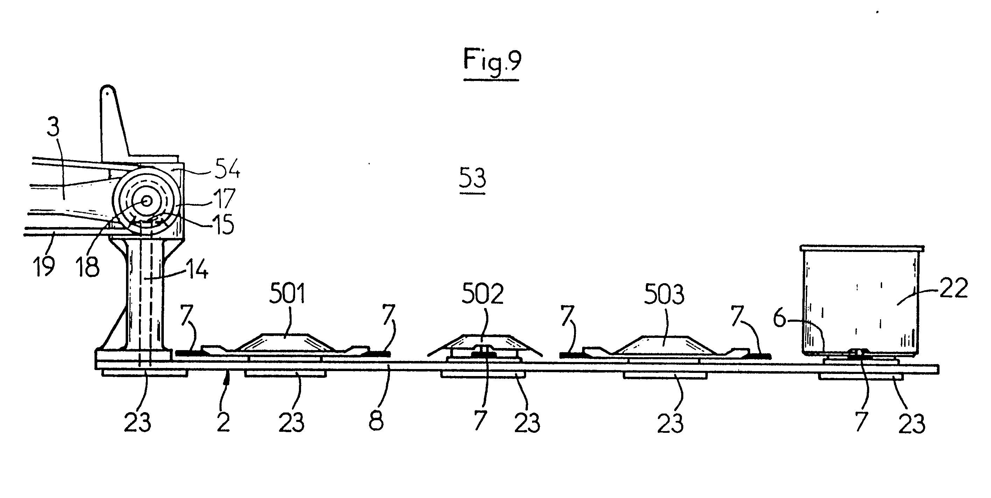

La faucheuse (53) de la figure 9 est d'une construction légèrement différente de celle de la figure 1 et les organes de cette faucheuse (53) analogues à ceux de la faucheuse (1) portent le même repère. Ladite faucheuse (53) comporte une barre de coupe (2) et un châssis (3) partiellement représentés.

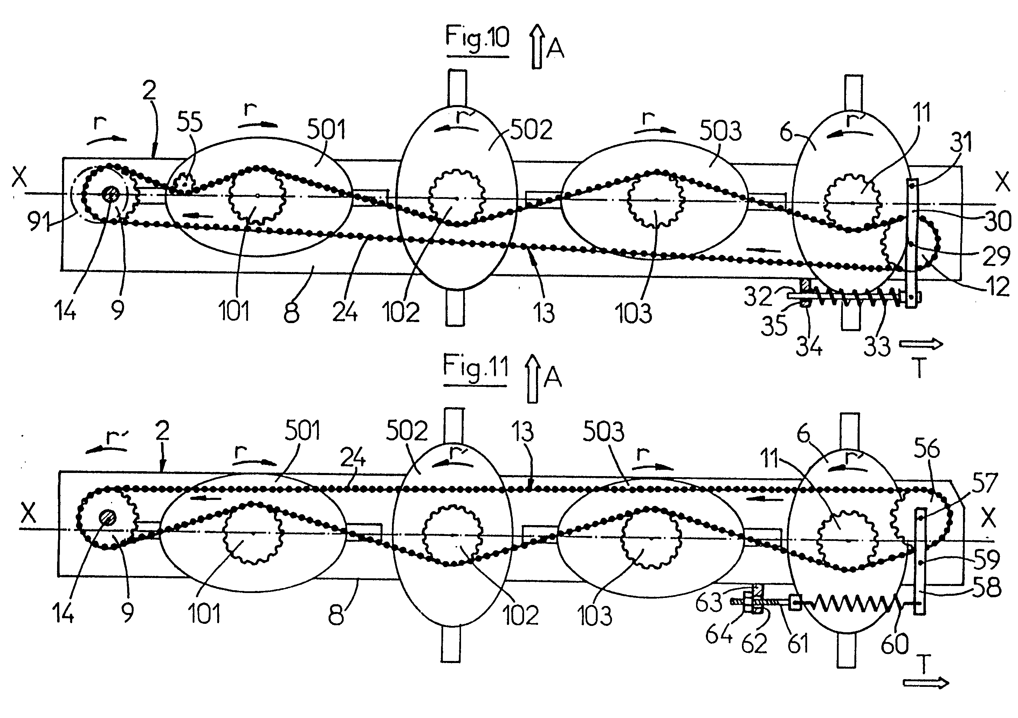

La barre de coupe possède à titre d'exemple non limitatif quatre disques (501, 502, 503, 6) supportant des éléments coupants (7). Les disques (501, 502, 503, 6) sont entraînés en rotation à l'aide d'organes de transmission (9, 101, 102, 103, 11, 12, 13) (fig. 10) logés dans le carter (8) s'étendant sous les disques. La roue motrice (9) est entraînée en rotation par un arbre sensiblement vertical (14) qui s'étend à l'intérieur d'un carter de renvoi (54) vissé à l'extrémité intérieure de la barre de coupe (2) sur le dessus du carter (8). L'entraînement de l'arbre (14) est réalisé comme dans la faucheuse (1). Le carter de renvoi (54) assure le logement des organes d'entraînement (14, 15, 17) de la roue motrice (9) ainsi que la liaison de la barre de coupe (2) au châssis (3). Le disque extérieur (6) est surmonté d'un tambour (22) qui favorise l'écoulement vers l'arrière du fourrage coupé par le disque (6) et assure la bonne séparation du fourrage coupé et du fourrage encore sur pied. La barre de coupe (2) comporte également des patins (23) fixés sous le carter (8), qui lui permettent de glisser sur le sol.

La figure 10 montre schématiquement l'agencement des organes de transmission dans le carter (8). Chaque roue de disque (101, 102, 103, 11) est solidaire d'un disque (501, 502, 503, 6). Ces roues de disque sont entraînées par une roue motrice (9) calée sur l'arbre sensiblement vertical (14). Entre la roue motrice (9) et la première roue de disque (101), on a agencé une roue (55) qui plie le brin de la courroie (13) s'étendant entre cette roue motrice (9) et cette première roue de disque (101) pour que la longueur de courroie qui collabore avec ladite roue de disque (101) soit suffisante pour transmettre la puissance nécessaire à l'entraînement de cette roue. Les disques (501, 503) tournent dans le sens (r) tandis que les disques (502, 6) tournent dans le sens contraire (r'). Dans cet exemple les disques (501 et 6) situés à chacune des extremités de la barre de coupe (2) tournent également dans le sens contraire l'un de l'autre, de sorte qu'à l'avant de la barre de coupe (2), ces disques tournent vers le milieu de ladite barre de coupe pour que la largeur de l'andain de fourrage coupé soit plus petite que la largeur de coupe. De ce fait, après la dernière roue de disque (11) s'étend une roue (12) sur laquelle s'enroule la courroie (13) avant de rejoindre la roue motrice (9). Le brin de retour (24) de la courroie (13) qui s'étend entre la roue (12) et la roue motrice (9) est positionné derrière les roues de disque (101, 102, 103, 11) par rapport au sens d'avancement (A) de la faucheuse. Compte tenu du sens de rotation de la roue motrice (9), ledit brin de retour (24) est tendu.

La tension correcte de la courroie (13) est obtenue en déplaçant la roue motrice (9) (voir position (91)) à l'aide d'un mécanisme qui est à la portée de l'homme de l'art. Dans le cadre de l'invention, cette tension peut cependant également être réglée en déplaçant une autre roue, de préférence autre que les roues de disque (101, 102, 103, 11).

Le mécanisme permettant d'amortir les efforts engendrés par le freinage ou le blocage d'un disque, est semblable à celui décrit dans la fig. 2, amputé de l'écrou (36) qui servait au réglage de la tension. Il est cependant évident que dans le cadre de l'invention, l'entraînement de la fig. 10 pourra également être équipé d'un mécanisme tendeur et amortisseur semblable à celui de la fig. 2.

La fig. 11 montre schématiquement une variante de l'agencement des organes de transmission dans le carter (8). Cet agencement diffère de celui de la fig. 10 par le fait que le brin de retour tendu (24) de la courroie (13) s'étend devant les roues de disque (101, 102, 103, 11). De plus, le mécanisme tendeur et amortisseur comporte un ressort de traction. Pour éviter que le brin de retour (24) n'interfère avec la roue de disque (102) ou avec le brin d'entraînement de la courroie (13) qui passe sur lesdites roues de disque, on a agencé une roue (56) qui fait partie du mécanisme tendeur et amortisseur de la courroie (13).

Ce mécanisme tendeur et amortisseur a la structure suivante: l'axe de rotation (57) de la roue (56) est solidaire de l'une des extrémités d'un levier (58). Ce levier peut pivoter par rapport au carter (8) autour d'un axe (59) solidaire dudit carter. L'autre extrémité du levier (58) est liée à un ressort de traction (60) qui est lui-même lié par sa deuxième extrémité à une tige (61) partiellement ou totalement filetée. La tige (1) s'étend librement à travers un trou (62) aménagé dans une butée (63) solidaire du carter (8), de sorte que le ressort (60) s'étende entre le levier (58) et ladite butée (63). Sur le bout de la tige (61) qui s'étend au-delà de la butée (63), on a vissé un écrou (64) qui s'appuie sur la face de la butée (63) opposée à celle qui se trouve du côté du ressort (60).

Ce mécanisme fonctionne de la manière suivante: lorsqu'on veut monter une courroie (13), on dévisse l'écrou (64) pour détendre au maximum le ressort (60). Quand la courroie (13) est en place, on visse l'écrou (64), ce qui a pour effet de déplacer la tige (61) dans le sens contraire de la flèche (T). Pendant son déplacement, la tige (61) tire sur le ressort (60) qui tire à son tour sur le levier (58) et oblige celui-ci à pivoter autour de l'axe (59) de sorte que la roue (56) se déplace sensiblement essentiellement dans le sens de la flèche (T). Lorsque la courroie (13) commence à être tendue, un vissage supplémentaire de l'écrou (64) aura pour conséquence de tendre le ressort (60) qui exerce alors une certaine traction sur le levier (58) et maintient une certaine tension sur la courroie (13). Il est à observer qu'une rotation du levier (58) et de la roue (56) autour de l'axe (59), qui provoque le déplacement de la roue (56) dans le sens contraire de la flèche (T), est possible compte tenu de l'agencement du ressort (60).

Tout comme dans les exemples précédents, cet agencement de l'entraînement permet d'encaisser efficacement les chocs auxquels sont soumis les disques pendant le travail de sorte que les risques de rupture de la courroie (13) sont diminués.

En effet, lorsqu'un disque (501, 502, 503, 504) est freiné ou bloqué, la roue motrice (9) continue à tirer sur le brin (24) de la courroie (13) qui tire lui sur la roue (56). Cette traction exercée sur la roue (56) provoque le déplacement de celle-ci dans le sens contraire de la flèche (T) puisque le ressort (60) autorise un tel déplacement, de sorte que l'effort engendré par le freinage ou le blocage d'un disque est progressivement amorti.

Bien que cela ne soit pas représenté, les roues (9, 101, 102, 103, 11, 56) pourront également être équipées de flasques (51, 52) comme les roues de la faucheuse de l'exemple précédent.

Comme dit plus haut, la roue (56) permet au brin de retour (24) de ne pas toucher 'a roue de disque (102) ou le brin d'entraînement qui passe sur les roues de disque. Pour ce faire, elle s'étend avantageusement en tout ou en partie devant l'axe (X, X) joignant les axes de rotation des disques (501, 502, 503, 6). La roue motrice (9) pourra également, si nécessaire, s'étendre en tout ou en partie devant ledit axe (X, X).

Dans la description de ces exemples, l'organe de transmission sans fin (13) est une courroie crantée sur ses deux faces. On ne sortira cependant pas du cadre de l'invention en employant un autre organe de transmission sans fin

La courroie crantée sur les deux faces présente cependant de nombreux avantages car elle garantit un entraînement synchrone des disques en ne nécessitant aucune lubrification et en assurant une marche sans bruit.

## Revendications

1. Faucheuse à disques comportant un carter (8) situé sous les disques (4, 501, 502, 503, 6) et contenant un organe de transmission sans fin (13) en vue de l'entraînement par le bas d'au-moins un desdits disques (4, 501, 502, 503, 6) et s'enroulant sur une roue de renvoi (12, 56), caractérisée par le fait que le brin de retour (24) de l'organe de transmission sans fin (13) qui s'étend entre la roue (11) du dernier disque (6) et la roue motrice (9) est le brin tendu de l'organe de transmission sans fin (13) et que ce brin de retour (24) s'enroule de façon connue en soi sur une roue de renvoi (12, 56) qui peut se déplacer à l'encontre de moyens élastiques (33, 60).

2. Faucheuse à disques selon la revendication 1, caractérisée par le fait que la roue de renvoi (12, 56) s'étend près de la dernière roue de disque (11).

3. Faucheuse à disques selon la revendication 1 ou 2, caractérisée par le fait que la roue de renvoi (12, 56) peut se déplacer dans une direction essentiellement sensiblement parallèle à l'axe longitudinal de la barre de coupe (2), c'est-à-dire sensiblement dans la direction du brin de retour (24).

4. Faucheuse à disques selon la revendication 1, 2 ou 3, caractérisée par le fait que la roue de renvoi (12, 56) sert de moyen de réglage de la tension de l'organe de transmission sans fin (13).

5. Faucheuse à disques selon l'une des revendications 1, 2, 3 ou 4, caractérisée par le fait que le brin de retour (24) de l'organe de transmission sans fin (13) s'étend derrière les roues de disques (101, 102, 103, 11).

6. Faucheuse à disques selon la revendication 5, caractérisée par le fait que la roue de renvoi (12) s'étend en tout ou en partie derrière l'axe (X, X) joignant les axes de rotation des roues de disque (101, 102, 103, 11).

7. Faucheuse à disques selon la revendication 5 ou 6, caractérisée par le fait que le brin de retour (24) de l'organe de transmission sans fin (13) s'enroule sur une deuxième roue (121).

8. Faucheuse à disques selon la revendication 7, caractérisée par le fait que la roue (121) s'étend près de la dernière roue de disque (11) et entre ladite roue de disque (11) et la roue de renvoi (12).

9. Faucheuse à disques selon la revendication 5, 6, 7 ou 8, caractérisée par le fait que la roue motrice (9) s'étend en tout ou en partie derrière l'axe (X, X) joignant les axes de rotation des roues de disque (101, 102, 103, 11).

10. Faucheuse à disques selon la revendication 9, caractérisée par le fait que la distance (L1) entre les axes de rotation des disques (4, 501) est plus petite que la distance (L2) entre les axes de rotation des disques (501, 502, 503, 6).

11. Faucheuse à disques selon la revendication 1, 2, 3 ou 4, caractérisée par le fait que le brin de retour (24) de l'organe de transmission sans fin (13) s'étend devant les roues de disque (101, 102, 103, 11).

12. Faucheuse à disques selon la revendication 11, caractérisée par le fait que la roue de renvoi (56) s'étend en tout ou en partie devant l'axe (X, X) joignant les axes de rotation des roues de disque (101, 102, 103, 11).

13. Faucheuse à disques selon la revendication 11 ou 12, caractérisée par le fait que la roue motrice (9) s'étend en tout ou en partie devant l'axe (X, X) joignant les axes de rotation des roues de disques (101, 102, 103, 11).

14. Faucheuse à disques selon l'une des revendications précédentes, caractérisée par le fait que l'une au moins parmi les roues (9, 101, 102, 103, 11) et la roue de renvoi (12) est munie d'au moins un flasque (51, 52).

15. Faucheuse à disques selon la revendication 14, caractérisée par le fait qu'au moins la roue motrice (9) et la roue de renvoi (12) possèdent deux flasques (51, 52).

16. Faucheuse à disques selon la revendication 14 ou 15, caractérisée par le fait qu'au moins deux roues de disque voisines (101 et 102, 102 et 103, 103 et 11) ne sont munies que d'un flasque, le flasque (51) de l'une des roues d'un couple étant disposé à la face inférieure de ladite roue, tandis que le flasque (52) de l'autre roue de ce couple est disposé à la face supérieure de cette autre roue.

17. Faucheuse à disques selon l'une des revendications précédentes, caractérisée par le fait que les moyens d'entraînement (14) de l'organe de transmission sans fin (13) s'étendent à travers le premier disque (4).

18. Faucheuse à disques selon l'une des revendications précédentes, caractérisée par le fait que l'organe de transmission sans fin (13) est une courroie crantée sur les deux faces.

## Patentansprüche

1. Scheibenmähwerk, mit einem unter den Scheiben (4, 501, 502, 503, 6) liegenden Gehäuse (8), das ein geschlossenes Übertragungsorgan (13) enthält, welches mindestens eine der Scheiben (4, 501, 502, 503, 6) von unten antreibt und sich auf einem Umlenkrad (12, 56) aufrollt, dadurch gekennzeichnet, dass das rücklaufende Trumm (24) des geschlossenen Kraftübertragungsorgans (13), das sich zwischen dem Rad (11) der letzten Scheibe (6) und dem Triebrad (9) erstreckt, das gespannte Trumm des geschlossenen Kraftübertragungsorgans ist, und dass dieses rücklaufende Trumm (24) sich, in an sich bekannter Art, auf ein Umlenkrad (12, 56) aufrollt, das sich elastischen Mitteln (33, 60) widersetzend, verschieben kann.

2. Scheibenmähwerk nach dem Patentanspruch 1, dadurch gekennzeichnet, dass sich das Umlenkrad (12, 56) nah dem letzten Scheibenrad (11) erstreckt.

3. Scheibenmähwerk nach dem Patentanspruch 1 oder 2, dadurch gekennzeichnet, dass sich das Umlenkrad (12, 56) in eine Richtung, die im wesentlichen parallel zu der Längsachse des Mähbalkens (2) verläuft verschieben kann, das heisst etwa in die Richtung des rücklaufenden Trumms (24).

4. Scheibenmähwerk nach dem Patentanspruch 1, 2 oder 3, dadurch gekennzeichnet, dass das Umlenkrad (12, 56) als Spannungsregelungsmittel des endlosen Kraftübertragungsorgans (13) dient.

5. Scheibenmähwerk nach dem Patentanspruch 1, 2, 3 oder 4, dadurch gekennzeichnet, dass das rücklaufende Trumm (24) des endlosen Kraftübertragungsorgans (13) sich hinter den Scheibenrädern (101, 102, 103, 11) erstreckt.

6. Scheibenmähwerk nach dem Patentanspruch 5, dadurch gekennzeichnet, dass sich das Umlenkrad (12) ganz oder teilweise hinter der Achse (X, X), die die Drehachsen der Scheibenräder (101, 102, 103, 11) verbindet, erstreckt.

7. Scheibenmähwerk nach dem Patentanspruch 5 oder 6, dadurch gekennzeichnet, dass das rücklaufende Trumm (24) des endlosen Kraftübertragungsorgans (13) sich auf ein zweites Rad (121) aufrollt.

8. Scheibenmähwerk nach dem Patentanspruch 7, dadurch gekennzeichnet, dass sich das Rad (121) nah dem letzten Scheibenrad (11) und zwischen dem gesagten Scheibenrad (11) und dem Umlenkrad (12) erstreckt.

9. Scheibenmähwerk nach dem Patentanspruch 5, 6, 7 oder 8, dadurch gekennzeichnet, dass sich das Triebrad (9) ganz oder teilweise hinter der Achse (X, X), die die Drehachsen der Scheibenräder (101, 102, 103, 11) verbindet, erstreckt.

10. Scheibenmähwerk nach dem Patentanspruch 9, dadurch gekennzeichnet, dass der Abstand (L1) zwischen den Drehachsen der Scheiben (4, 501) kleiner ist als der Abstand (L2) zwischen den Drehachsen der Scheiben (501, 502, 503, 6).

11. Scheibenmähwerk nach dem Patentanspruch 1, 2, 3 oder 4, dadurch gekennzeichnet, dass sich das rücklaufende Trumm (24) des endlosen Kraftübertragungsorgans (13) vor den Scheibenachsen (101, 102, 103, 11) erstreckt.

12. Scheibenmähwerk nach dem Patentanspruch 11, dadurch gekennzeichnet, dass sich das Umlenkrad (56) ganz oder teilweise vor der Achse (X, X), die die Drehachsen der Scheibenräder (101, 102, 103, 11) verbindet, erstreckt.

13. Scheibenmähwerk nach dem Patentanspruch 11 oder 12, dadurch gekennzeichnet, dass sich das Triebrad (9) ganz oder teilweise vor der Achse (X, X), die die Drehachsen der Scheibenräder (101, 102, 103, 11) verbindet, erstreckt.

14. Scheibenmähwerk nach einem der vorigen Patentansprüche, dadurch gekennzeichnet, dass mindestens eines der Räder (9, 101, 102, 103, 11) und das Umlenkrad (12) mit mindestens einem Flansch (51, 52) ausgestattet ist.

15. Scheibenmähwerk nach dem Patentanspruch 14, dadurch gekennzeichnet, dass mindestens das Triebrad (9) und das Umlenkrad (12) zwei Flanschen (51, 52) besitzen.

16. Scheibenmähwerk nach dem Patentanspruch 14 oder 15, dadurch gekennzeichnet, dass mindestens zwei nebeneinander liegende Scheibenräder (101 und 102, 102 und 103, 103 und 11) mit nur einem Flansch ausgestattet sind, wobei der Flansch (51) eines der gepaarten Räder an der Unterseite des gesagten Rades angeordnet ist, während der Flansch (52) des anderen Rades dieses Paars an der Oberseite dieses anderen Rades angeordnet ist.

17. Scheibenmähwerk nach einem der vorigen Patentansprüche, dadurch gekennzeichnet, dass sich die Antriebsmittel (14) des endlosen Kraftübertragungsorgans (13) durch die erste Scheibe hindurch erstrecken.

18. Scheibenmähwerk nach einem der vorigen Patentansprüche, dadurch gekennzeichnet, dass das endlose Kraftübertragungsorgan (13) ein doppelseitiger Zahnriemen ist.

## Claims

1. A disc-mower including a casing (8) located under the discs (4, 501, 502, 503, 6) and containing an endless transmission member (13) with a view to driving from below at least one of the said discs (4, 501, 502, 503, 6) and wrapped round a laywheel (12, 56), characterized by the fact that the return side (24) of the endless transmission member (13), which extends between the wheel (11) on the last disc (6) and the driving wheel (9), is the tight side of the endless transmission member (13) and that this return side (24) is wrapped in a manner in itself known round a laywheel (12, 56) which is able to move in opposition to elastic means (33, 60).

2. A disc-mower as in Claim 1, characterized by the fact that the laywheel (12, 56) extends near to the last disc-wheel (11).

3. A disc-mower as in Claim 1 or 2, characterized by the fact that the laywheel (12, 56) can move in a direction essentially substantially in parallel with the longitudinal axis of the cutterbar (2), that is to say, substantially in the direction of the return side (24).

4. A disc-mower as in Claim 1, 2 or 3, characterized by the fact that the laywheel (12, 56) serves as a means of adjustment of the tension in the endless transmission member (13).

5. A disc-mower as in one of the claims 1, 2, 3 or 4, characterized by the fact that the return side (24) of the endless transmission member (13) extends behind the disc-wheels (101, 102, 103, 11).

6. A disc-mower as in Claim 5, characterized by the fact that the laywheel (12) extends wholly or partially behind the axis (X, X) joining the axes of rotation of the disc-wheels (101, 102, 103, 11).

7. A disc-mower as in Claim 5 or 6, characterized by the fact that the return side (24) of the endless transmission member (13) is wrapped round a second wheel (121).

8. A disc-mower as in Claim 7, characterized by the fact that wheel (121) extends near to the last disc-wheel (11) and between the said disc-wheel (11) and the laywheel (12).

9. A disc-mower as in Claim 5, 6, 7 or 8, characterized by the fact that the driving wheel (9) extends wholly or partially behind the axis (X, X) joining the axes of rotation of the disc-wheels (101, 102, 103, 11).

10. A disc-mower as in Claim 9, characterized by the fact that the distance (L1) between the axes of rotation of the discs (4, 501) is less than the distance (L2) between the axes of rotation of the discs (501, 502, 503, 6).

11. A disc-mower as in Claim 1, 2, 3 or 4, characterized by the fact that return side (24) of the endless transmission member (13) extends in front of the disc-wheels (101, 102, 103, 11).

12. A disc-mower as in Claim 11, characterized by the fact that laywheel (56) extends wholly or partially in front of the axis (X, X) joining the axes of rotation of the disc-wheels (101, 102, 103, 11).

13. A disc-mower as in Claim 11 or 12, characterized by the fact that the driving wheel (9) extends wholly or partially in front of the axis (X, X) joining the axes of rotation of the disc-wheels (101, 102, 103, 11).

14. A disc-mower as in one of the preceding Claims, characterized by the fact that at least one of the wheels (9, 101, 102, 103, 11) and the laywheel (12) is equipped with at least one cheekplate (51, 52).

15. A disc-mower as in Claim 14, characterized by the fact that at least the driving wheel (9) and the laywheel (12) have two cheekplates (51, 52).

16. A disc-mower as in Claim 14 or 15, characterized by the fact that at least two adjacent disc-wheels (101 and 102, 102 and 103, 103 and 11) are equipped with only one cheekplate, the cheekplate (51) of one of the wheels of a pair being arranged on the lower face of the said wheel, whilst the cheekplate (52) of the other wheel of this pair is arranged on the upper face of this other wheel.

17. A disc-mower as in one of the preceding Claims, characterized by the fact that the means (14) of driving the endless transmission member (13) extend through the first disc (4).

18. A disc-mower as in one of the preceding Claims, characterized by the fact that the endless transmission member (13) is a belt notched on both faces.

Fig.1

Fig.2

Fig.3

Fig.4

Fig.5

271  26

272

Fig.6

39      39

50      38      501

48      41

46      43      46

52      40

44

8      49      42      13

13  47  45  51      101  45  47

Fig.7

52      52      52      52

51   9   51   101   102  51   103   11   51   12

Fig.8

52      52      52      52

51   9   101   51   102   103   51   11   51   12

13

## Fig.9

**Fig.10**

**Fig.11**